(19) Europäisches Patentamt / European Patent Office / Office européen des brevets

(11) **EP 2 883 033 B1**

(12) **FASCICULE DE BREVET EUROPEEN**

(45) Date de publication et mention de la délivrance du brevet:
**07.09.2016 Bulletin 2016/36**

(51) Int Cl.:
**G01N 3/60** *(2006.01)*    G01N 3/08 *(2006.01)*

(21) Numéro de dépôt: **13745421.1**

(22) Date de dépôt: **06.08.2013**

(86) Numéro de dépôt international:
**PCT/EP2013/066478**

(87) Numéro de publication internationale:
**WO 2014/023729 (13.02.2014 Gazette 2014/07)**

(54) **PROCEDE DE MESURE DE LA TENACITE D'UN MATERIAU**

VERFAHREN ZUR MESSUNG DER FESTIGKEIT EINES MATERIALS

METHOD FOR MEASURING THE TENACITY OF A MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.08.2012 FR 1257701**

(43) Date de publication de la demande:
**17.06.2015 Bulletin 2015/25**

(73) Titulaire: **Commissariat à l'Énergie Atomique et aux Énergies Alternatives 75015 Paris (FR)**

(72) Inventeurs:
• **ROUNTREE, Cindy**
  **F-91440 Bures-sur-Yvette (FR)**
• **BONAMY, Daniel**
  **F-91440 Bures sue Yvette (FR)**

(74) Mandataire: **Brevalex**
  **95, rue d'Amsterdam**
  **75378 Paris Cedex 8 (FR)**

(56) Documents cités:
**US-A- 4 821 577**

• **GAÃ Â L PALLARES ET AL: "Crack opening profile in DCDC specimen", INTERNATIONAL JOURNAL OF FRACTURE, KLUWER ACADEMIC PUBLISHERS, DO, vol. 156, no. 1, 18 avril 2009 (2009-04-18), pages 11-20, XP019675817, ISSN: 1573-2673**

• **PRADES S ET AL: "Nano-ductile crack propagation in glasses under stress corrosion: spatiotemporal evolution of damage in the vicinity of the crack tip", INTERNATIONAL JOURNAL OF SOLIDS AND STRUCTURES, NEW YORK, NY, US, vol. 42, no. 2, 1 janvier 2005 (2005-01-01), pages 637-645, XP004610965, ISSN: 0020-7683, DOI: 10.1016/J.IJSOLSTR.2004.06.024**

• **BONAMY D ET AL: "Nanoscale damage during fracture in silica glass", INTERNATIONAL JOURNAL OF FRACTURE, KLUWER ACADEMIC PUBLISHERS, DO, vol. 140, no. 1-4, 1 juillet 2006 (2006-07-01), pages 3-14, XP019434606, ISSN: 1573-2673, DOI: 10.1007/S10704-006-6579-2**

• **FETT T ET AL: "A fracture mechanics analysis of the double cleavage drilled compression test specimen", ENGINEERING FRACTURE MECHANICS, PERGAMON PRESS, NEW YORK, NY, GB, vol. 76, no. 7, 1 mai 2009 (2009-05-01), pages 921-934, XP026038195, ISSN: 0013-7944, DOI: 10.1016/J.ENGFRACMECH.2008.12.016 [extrait le 2009-04-09]**

• **LECHENAULT F ET AL: "Damage of silicate glasses during stress corrosion", JOURNAL OF PHYSICS: CONFERENCE SERIES, INSTITUTE OF PHYSICS PUBLISHING, BRISTOL, GB, vol. 319, no. 1, 15 septembre 2011 (2011-09-15), page 12005, XP020210437, ISSN: 1742-6596, DOI: 10.1088/1742-6596/319/1/012005**

**Description**

**DOMAINE TECHNIQUE**

L'invention se situe dans le domaine de la caractérisation des matériaux et concerne plus spécifiquement un procédé de mesure de la ténacité $K_c$ d'un matériau sans réalisation d'une pré-fissure sur ce matériau.

**ÉTAT DE LA TECHNIQUE ANTÉRIEURE**

La fracture d'un matériau est un phénomène physique qui se produit sous l'effet de la corrosion et/ou de contraintes extérieures. Elle peut être provoquée volontairement, pour découper des pièces à usage industriel par exemple, ou accidentellement. Dans les deux cas il est souhaitable de connaître avec précision la résistance du matériau à la rupture. Cette résistance est caractérisée par un coefficient $K_c$, appelé ténacité, dont la connaissance revêt une grande importance dans plusieurs domaines technologiques.

Les techniques de l'art antérieur, illustrées par exemple dans les documents US 4 821 577 et G. Pallares et al.: "Crack opening profile in DCDC specimen", Int J Faract (2009) 156:11-20, utilisées pour mesurer la ténacité $K_c$ d'un matériau nécessitent la réalisation d'une pré-fissure avant d'effectuer un test consistant à appliquer une force sur un échantillon du matériau au moyen d'un dispositif de serrage ou d'une machine de traction et à augmenter cette force pour provoquer la propagation de la pré-fissure jusqu'à la cassure de l'échantillon. Le document S. Prades et al., "Nano-ductile crack propagation in glasses under stress corrosion: spatiotemporal évolution of damage in the vicinity of the crack tip" International Journal of Solids and Structures 42 (2005) 637-365, considéré comme l'état de l'art le plus proche, décrit le préambule de la revendication.

Pour calculer la ténacité $K_c$, il faut connaître la longueur $L_0$ de la pré-fissure juste avant l'instant où elle commence à se propager et la force $F_0$ appliquée à cet instant. Ces deux mesures sont souvent erronées car, d'une part, il est difficile de déterminer avec précision l'instant exact où la pré-fissure commence à se propager, c'est-à-dire, l'instant où la vitesse passe d'une valeur exactement égale à zéro à une valeur finie, et d'autre part, le fait d'introduire une pré-fissure préalablement à la mise sous contrainte de l'échantillon dans le dispositif de serrage ou la machine de traction ne permet pas d'avoir une pré-fissure parfaitement fine et parfaitement perpendiculaire aux contraintes imposées.

Un but de l'invention est de pallier les inconvénients des méthodes de l'art antérieur décrit ci-dessus par une technique dans laquelle il n'est pas nécessaire de réaliser une pré-fissure sur le matériau.

**EXPOSÉ DE L'INVENTION**

Le but de l'invention est atteint au moyen d'une méthode de mesure de la ténacité $K_c$ d'un matériau consistant à:

- placer un échantillon dudit matériau en forme de parallélépipède rectangle percé en son milieu d'un trou central entre deux mâchoires d'un dispositif de serrage, chacune desdites mâchoires appuyant sur une extrémité éloignée de l'échantillon,
- rapprocher les deux mâchoires de manière à exercer une force à chacune desdites extrémités jusqu'à rupture complète de l'échantillon,
- mesurer pendant le serrage les variations en fonction du temps de la force de serrage exercée à chaque extrémité de l'échantillon,
- déterminer la valeur maximale $F_0$ de ladite force de serrage,
- repérer à la surface d'une des surfaces de rupture trois zones distinctes, soit une première zone à proximité du trou avec un premier type de relief, une deuxième zone avec un deuxième type de relief, et une troisième zone avec un troisième type de relief moins prononcé que le deuxième type,
- mesurer la distance $L_0$ entre le bord du trou et une ligne de transition séparant la deuxième de la troisième zone,
- calculer le paramètre $K_c$ en fonction de la force $F_0$ et de la distance $L_0$.

Le procédé selon l'invention comporte en outre une étape d'écartement des deux mâchoires après la rupture.

Préférentiellement, le calcul du paramètre $K_c$ se fait à l'aide d'un logiciel d'éléments finis.

Dans un mode de réalisation de l'invention, l'échantillon a des dimensions vérifiant

$$5 \leq \frac{L}{W} \leq 10 \text{ et } 2,5 \leq \frac{W}{\emptyset} \leq 5,$$

la valeur de la ténacité $K_c$ étant obtenue à partir de la formule suivante :

$$K_{L0}$$

$$= \frac{(F_0/S)\sqrt{\frac{\pi}{2}}\,\phi}{\left(0.3156 + 0.7350\frac{w}{\phi} + 0.0346\left(\frac{w}{\phi}\right)^2\right) + \frac{2L_0}{\phi}\left(-0.4093 + 0.3794\frac{w}{\phi} - 0.0257\left(\frac{w}{\phi}\right)^2\right)}$$

Dans une première variante de mise en oeuvre du procédé selon l'invention, au cours de la détermination de la ténacité $K_c$, l'échantillon est placé dans une enceinte ultra-vide.

Dans une deuxième variante de mise en oeuvre du procédé selon l'invention au cours de la détermination de la ténacité $K_c$, l'échantillon est immergé totalement ou partiellement dans un liquide non corrosif.

Dans une troisième variante de mise en oeuvre du procédé selon l'invention au cours de la détermination de la ténacité $K_c$, on remplit de façon hermétique le trou central avec un liquide non corrosif.

## BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :

- figure 1 illustre schématiquement un échantillon d'un matériau à caractériser ;
- figure 2 est une courbe illustrant les variations en fonction du temps de la force de serrage F(t) exercée à chaque extrémité de l'échantillon ;
- figure 3 illustre schématiquement surface de rupture avec trois zones distinctes.

## EXPOSÉ DÉTAILLÉ DE MODES DE RÉALISATION PARTICULIERS

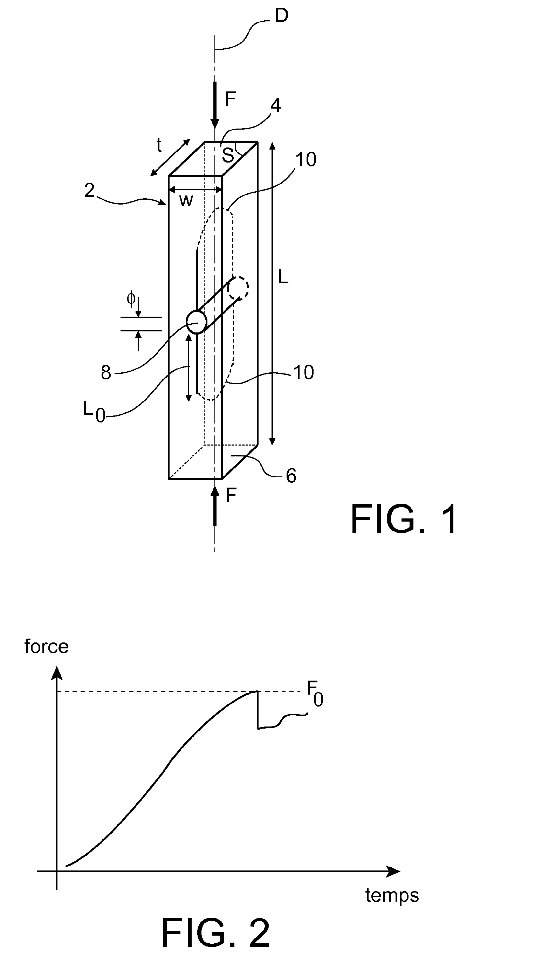

La figure 1 illustre un échantillon d'un matériau à caractériser ayant une forme parallélipédique de 25 mm de longueur, ayant une section carrée de 5x5mm$^2$ et percé perpendiculairement à deux de ses grandes faces parallèles respectivement 4 et 6 d'un trou central 8 de 1 mm de diamètre.

L'invention exploite le fait que pour la géométrie d'un échantillon selon la figure 1, tant qu'une fissure garde une longueur inférieure à $L_0$, le facteur géométrique d'amplification des contraintes, égal au rapport du facteur d'intensité des contraintes K par la force appliquée F, diminue avec la longueur de la fissure alors qu'il augmente lorsque la longueur de la fissure dépasse la valeur $L_0$.

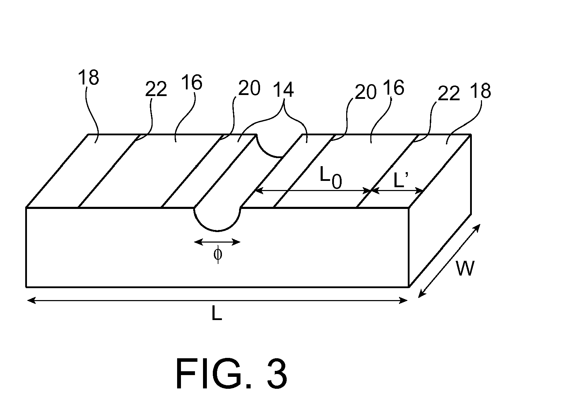

Pour mesurer la ténacité $K_c$ de l'échantillon 2, on le place entre les mâchoires d'une machine de serrage, puis on le centre de sorte que les surfaces 4 et 6 soient perpendiculaires à l'axe D. Ensuite on déplace les mâchoires l'une vers l'autre, par exemple à vitesse constante, de manière à appliquer sur chacune des surfaces 4 et 6 une force F en direction du trou 8. Sous l'effet des forces F, une fissure 10 apparait sur la surface de l'échantillon 2 de part et d'autre du trou central. Elle se propage jusqu'à ce que l'échantillon se casse en deux morceaux. Il peut être avantageux d'écarter alors immédiatement les deux mâchoires. Pendant le serrage, on mesure la valeur F(t) en fonction du temps de la force appliquée. Comme cela est illustré par la figure 2, cette force F(t) présente un maximum qui correspond à la valeur $L_o$ de longueur de fissure. Par ailleurs, comme cela est illustré par la figure 3, les deux surfaces de rupture de l'échantillon présentent trois zones de part et d'autre du trou, soit une première zone 14 à proximité du trou avec un premier type de relief, une deuxième zone 16 avec un deuxième type de relief, et une troisième zone 18 avec un troisième type de relief moins prononcé que le deuxième type. Les zones 14, 16 et 18 sont séparées respectivement par des lignes dites d'arrêt 20, 22. Selon le type de matériau, les lignes d'arrêt 20, 22 sont visibles à l'oeil nu, au microscope optique, au microscope à force atomique, ou au profilomètre. La première zone 14, à proximité du trou correspond au démarrage rapide de la fissure ($K > K_c$). La deuxième zone 16 correspond à un régime de propagation stable ($K = K_c$). La troisième zone 18 correspond à l'accélération brutale de la propagation de la fissure jusqu'à la rupture ($K > K_c$). La ligne 22 séparant la deuxième zone 16 de la troisième zone 18 coïncide avec la valeur $L_o$. Sa valeur est mesurée entre cette ligne et le bord du trou 8. Si ce dernier est fragmenté, la mesure sera perturbée et il est alors conseillé de calculer cette longueur $L_o$ par $L_o = \frac{L}{2} - \frac{\emptyset}{2} - L'$. Puis à partir de ces valeurs $F_o$ et $L_o$ on peut calculer la valeur $K_c$ par éléments finis (ex ABAQUS® ou CAST3M® du CEA).

Dans le cas particulier où $5 \leq \frac{L}{W} \leq 10$ et $2{,}55 \leq \frac{w}{\phi} \leq 5$, on a une bonne approximation de la valeur de $K_c$ en fonction de $F_o$, $L_o$ et la géométrie de l'échantillon, par la formule :

$$K_{L0} = \frac{(F_0/S)\sqrt{\frac{\pi}{2}\phi}}{\left(0{,}3156 + 0{,}7350\frac{w}{\phi} + 0{,}0346\left(\frac{w}{\phi}\right)^2\right) + \frac{2L_0}{\phi}\left(-0{,}4093 + 0{,}3794\frac{w}{\phi} - 0{,}0257\left(\frac{w}{\phi}\right)^2\right)}$$

où S est la section carrée de l'échantillon en m 2, $\phi$ est le diamètre du trou central en m, w est la largeur d'échantillon en m, $L_o$ est la longueur de la fissure en m, et $F_o$ est la force de serrage mesurée en N.

Avantageusement, si le matériau se corrode à l'air, la mesure est réalisée dans une enceinte ultra-vide.

On peut également baigner l'échantillon dans un liquide non corrosif ou remplir uniquement l'intérieur du trou réalisé dans l'échantillon avec ce même liquide (par exemple du tetradécane).

Des mesures ont été réitérées sur un échantillon selon la figure 1 en silice Corning® 7980. On obtient $F_o$ = 8000 ± 400N et $L_o$ = 8 ± 0,1mm ce qui permet de calculer $K_c$ = 0,77 MPam$^2$ (à 5% près), alors que Corning donne $K_c$ = 0,79 avec une méthode standard.

Grâce au procédé selon l'invention, il n'est pas nécessaire de réaliser une pré fissure sur l'échantillon du matériau.

La méthode selon l'invention est appliquée avantageusement pour caractériser un matériau utilisé dans des conditions extrêmes, tels que par exemple, des conditions dans lesquelles le matériau est soumis à une forte irradiation.

En outre, le procédé selon l'invention peut être mis en oeuvre en dehors d'une chambre à vide.

**Revendications**

**1.** Procédé de mesure de la ténacité $K_c$ d'un matériau, comportant les étapes suivantes:

- placer un échantillon (2) dudit matériau en forme de parallélépipède rectangle percé en son milieu d'un trou central (8) entre deux mâchoires d'un dispositif de serrage, chacune desdites mâchoires appuyant sur une extrémité (4,6) éloignée de l'échantillon,
- rapprocher les deux mâchoires de manière à exercer une force à chacune desdites extrémités (4,6) jusqu'à rupture complète de l'échantillon,
- mesurer pendant le serrage les variations en fonction du temps de la force de serrage exercée à chaque extrémité (4,6) de l'échantillon:
- déterminer la valeur maximale $F_0$ de ladite force de serrage,

procédé **caractérisé par** les étapes suivantes :

- repérer à la surface d'une des surfaces de rupture trois zones distinctes, soit une première zone (14) à proximité du trou (8) avec un premier type de relief correspondant au démarrage rapide de la fissure, une deuxième zone (16) avec un deuxième type de relief correspondant à un régime de propagation stable de ladite fissure, et une troisième zone (18) avec un troisième type de relief moins prononcé que le deuxième type correspondant à une accélération brutale de la propagation de la fissure jusqu'à la rupture,
- mesurer la distance $L_0$ entre le bord du trou (8) et une ligne de transition (22) séparant la deuxième zone (16) de la troisième zone (18), ladite ligne de transition (22) marquant le début de l'accélération brutale de la propagation de la fissure jusqu'à la rupture de l'échantillon,
- calculer le paramètre $K_c$ en fonction de la force $F_0$ et de la distance $L_0$.

**2.** procédé selon la revendication 1 comportant en outre une étape d'écartement des deux mâchoires après la rupture.

**3.** procédé selon la revendication 1 dans lequel le calcul du paramètre $K_c$ se fait à l'aide d'un logiciel d'éléments finis.

**4.** Procédé selon la revendication 1 dans lequel l'échantillon a des dimensions vérifiant

$$5 \le \frac{L}{W} \le 10 \text{ et } 2,5 \le \frac{W}{\emptyset} \le 5,$$

la valeur de la ténacité $K_c$ étant obtenue à partir de la formule suivante :

$$K_{L0} = \frac{(F_0/S)\sqrt{\frac{\pi}{2}\,\phi}}{\left(0.3156 + 0.7350\frac{w}{\phi} + 0.0346\left(\frac{w}{\phi}\right)^2\right) + \frac{2L_0}{\phi}\left(-0.4093 + 0.3794\frac{w}{\phi} - 0.0257\left(\frac{w}{\phi}\right)^2\right)}$$

où S est la section carrée de l'échantillon en m 2, $\phi$ est le diamètre du trou central en m, w est la largeur d'échantillon en m, $L_o$ est la longueur de la fissure en m, et $F_o$ est la force de serrage mesurée en N

**5.** Procédé selon la revendication 1 dans lequel, au cours de la détermination de la ténacité $K_c$, l'échantillon (2) est placé dans une enceinte ultra-vide.

**6.** Procédé selon la revendication 1 dans lequel, au cours de la détermination de la ténacité $K_c$, l'échantillon (2) est placé totalement ou partiellement dans un liquide non corrosif.

**7.** Procédé selon la revendication 1 dans lequel, au cours de la détermination de la ténacité $K_c$, on remplit de façon hermétique le trou central (8) avec un liquide non corrosif.


**Patentansprüche**

**1.** Verfahren zum Messen der Festigkeit $K_c$ eines Materials, umfassend die folgenden Schritte:

- Platzieren einer Probe (2) des Materials in Form eines Quaders, in dessen Mitte ein zentrales Loch (8) gebohrt ist, zwischen zwei Backen einer Spannvorrichtung, wobei jede der Backen auf ein entferntes Ende (4,6) der Probe drückt,
- Annähern der zwei Backen derart, dass eine Kraft auf jedes der Enden (4,6) ausgeübt wird, bis zum vollständigen Brechen der Probe,
- Messen, während des Spannens, der Variationen der Spannkraft, die auf jedes Ende (4,6) der Probe ausgeübt wird, als Funktion der Zeit;
- Bestimmen des Maximalwerts $F_0$ der Spannkraft,

wobei das Verfahren durch die folgenden Schritte gekennzeichnet ist:

- Markieren, auf der Oberfläche einer der Bruchoberflächen, von drei getrennten Zonen, nämlich eine erste Zone (14) in der Nähe des Lochs (8) mit einem ersten Relieftyp entsprechend dem schnellen Beginn des Risses, eine zweite Zone (16) mit einem zweiten Relieftyp entsprechend einem stabilen Ausbreitungsbereich des Risses, und eine dritte Zone (18) mit einem dritten Relieftyp, der weniger deutlich ausgeprägt ist als der zweite Typ, entsprechend einer sprunghaften Beschleunigung der Ausbreitung des Risses bis zum Brechen,
- Messen des Abstands $L_0$ zwischen dem Rand des Lochs (8) und einer Übergangslinie (22), die die zweite Zone (16) von der dritten Zone (18) trennt, wobei die Übergangslinie (22) den Beginn der sprunghaften Beschleunigung der Ausbreitung des Risses bis zum Brechen der Probe markiert,
- Berechnen des Parameters $K_c$ als Funktion der Kraft $F_0$ und des Abstands $L_0$.

**2.** Verfahren nach Anspruch 1, ferner umfassend einen Schritt des Beabstandens der zwei Backen nach dem Brechen.

**3.** Verfahren nach Anspruch 1, bei dem die Berechnung des Parameters $K_c$ mit Hilfe einer Finite-Elemente-Software erfolgt.

**4.** Verfahren nach Anspruch 1, bei dem die Probe Abmessungen hat, die

$$5 \leq \frac{L}{W} \leq 10 \text{ und } 2{,}5 \leq \frac{W}{\phi} \leq 5$$

erfüllt, wobei der Festigkeitswert $K_c$ erhalten wird ausgehend von der folgenden Formel:

$$K_{L0} = \frac{(F_0/S)\sqrt{\frac{\pi}{2}\,\phi}}{\left(0{,}3156 + 0{,}7350\frac{w}{\phi} + 0{,}0346\left(\frac{w}{\phi}\right)^2\right) + \frac{2L_0}{\phi}\left(-0{,}4093 + 0{,}3794\frac{w}{\phi} - 0{,}0257\left(\frac{w}{\phi}\right)^2\right)}$$

wobei S der quadratische Querschnitt der Probe in m 2 ist, $\phi$ der Durchmesser des zentralen Lochs in m ist, w die Breite der Probe in m ist, $L_0$ die Länge des Risses in m ist, und $F_0$ die gemessene Spannkraft in N ist.

**5.** Verfahren nach Anspruch 1, bei dem im Verlauf der Bestimmung der Festigkeit $K_c$ die Probe (2) in einer Ultrahochvakuumkammer platziert ist.

**6.** Verfahren nach Anspruch 1, bei dem während der Bestimmung der Festigkeit $K_c$ die Probe (2) vollständig oder teilweise in einer korrosionsbeständigen Flüssigkeit platziert ist.

**7.** Verfahren nach Anspruch 1, bei dem man während der Bestimmung der Festigkeit $K_c$ das zentrale Loch (8) hermetisch mit einer korrosionsbeständigen Flüssigkeit auffüllt.

**Claims**

**1.** Method for measuring the tenacity $K_c$ of a material, comprising the following steps:

- placing a test piece (2) of said material in the form of a cuboid drilled at its centre by a central hole (8) between two jaws of a compression testing device, each of said jaws pressing on a far end (4,6) of the test piece;
- bringing the two jaws towards each other to apply a force to each of said ends (4,6) until the test piece fails completely;
- measuring the variations of the compression force applied at each end (4,6) of the test piece as a function of the time, during compression;
- determining the maximum value $F_0$ of said compression force;
- marking three distinct zones on one of the failure surfaces, namely a first zone (14) close to the hole (8) with a first type of relief corresponding to a fast propagation rate of the crack, a second zone (16) with a second type of relief corresponding to a stable propagation rate of said crack, and a third zone (18) with a third type of relief less pronounced than the second type corresponding to sudden acceleration of the crack propagation until crack failure occurs, method **characterised by** the following steps:

- measuring the distance $L_0$ between the edge of the hole (8) and a transition line (22) separating the second zone (16) from the third zone (18), said transition line (22) materialising the beginning of the sudden acceleration of the crack propagation until test piece failure occurs,
- calculating the parameter $K_c$ as a function of the force $F_0$ and the distance $L_0$.

**2.** Method according to claim 1 also comprising a step to move the two jaws away from each other after failure.

**3.** Method according to claim 1 in which the parameter $K_c$ is calculated using finite element software.

**4.** Method according to claim 1 in which the test piece has dimensions satisfying the following equation

$$5 \leq \frac{L}{W} \leq 10 \text{ and } 2.5 \leq \frac{W}{\phi} \leq 5,$$

the value of the tenacity $K_c$ being obtained from the following formula:

$$K_{L0} = \frac{(F_0/S)\sqrt{\frac{\pi}{2}\,\phi}}{\left(0.3156 + 0.7350\frac{w}{\phi} + 0.0346\left(\frac{w}{\phi}\right)^2\right) + \frac{2L_0}{\phi}\left(-0.4093 + 0.3794\frac{w}{\phi} - 0.0257\left(\frac{w}{\phi}\right)^2\right)}$$

where S is the square cross-section of the test piece in m$^2$, $\phi$ is the diameter of the central hole in m, w is the test piece width in m, $L_o$ is the crack length in m, and $F_o$ is the compression force measured in N.

5. Method according to claim 1 in which the test piece (2) is put into an ultra high vacuum chamber while the tenacity $K_c$ is being determined.

6. Method according to claim 1 in which the test piece is totally or partially immersed in a non-corrosive liquid while the tenacity $K_c$ is being determined.

7. Method according to claim 1 in which the central hole is hermetically filled with a non-corrosive liquid while the tenacity $K_c$ is being determined.

FIG. 1

FIG. 2

FIG. 3

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4821577 A

**Littérature non-brevet citée dans la description**

- **G. PALLARES et al.** Crack opening profile in DCDC specimen. *Int J Faract,* 2009, vol. 156, 11-20

- **S. PRADES et al.** Nano-ductile crack propagation in glasses under stress corrosion: spatiotemporal évolution of damage in the vicinity of the crack tip. *International Journal of Solids and Structures,* 2005, vol. 42, 637-365